# EUROPEAN PATENT SPECIFICATION

(11) **EP 1 641 983 B1**
(45) Date of publication and mention of the grant of the patent: **19.05.2021**
(21) Application number: 04740592.3
(22) Date of filing: 02.07.2004
(51) Int. Cl.: E02F 5/12, E02F 5/10, B63B 35/03

(54) **TRENCHING APPARATUS AND METHOD**
VORRICHTUNG UND METHODE ZUM AUSHEBEN EINES GRABENS
DISPOSITIF ET PROCÉDÉ POUR CREUSER DES TRANCHÉES

(30) Priority: 04.07.2003 EP 03425443; 17.06.2004 GB 0413601
(43) Date of publication of application: 05.04.2006
(73) Proprietor: Saipem S.p.A., 20097 San Donato Milanese (Milano) (IT)
(72) Inventor: GIOVANNINI, Umberto, I-20094 Corsico (IT); FONTOLAN, Massimo, I-31059 Zero Branco (IT)
(74) Representative: Abel & Imray
(86) International application number: PCT/EP2004/007241
(87) International publication number: WO 2005/005736

(56) References cited:
- WO-A-83/00060
- FR-A- 2 473 228
- FR-A- 2 580 305
- GB-A- 1 399 802
- GB-A- 1 492 151
- US-A- 4 301 606
- US-A- 4 992 000
- US-B1- 6 336 419

## Description

This invention relates to a mobile apparatus for trenching a pipeline laid underwater and to a method of trenching a pipeline laid under water. The invention relates particularly, but not exclusively, to operations in shallow water.

Whilst the "pipeline" referred to will typically be hollow and for transferring oil, gas or other fluids, it is not relevant what takes place within the "pipeline" and thus the "pipeline" may also be a solid cable, for example a telecommunications cable.

It is known, after laying a pipeline, to form a trench under the pipeline, to allow the pipeline to drop into the trench, and subsequently to cover it. In a known procedure, a trench is formed under a pipeline by a first trenching machine which breaks up the soil under the pipeline, removes it and discharges it to a storage area at some location remote from the pipeline. In some cases the storage area may be defined by a coffer dam that surrounds it; in other cases the soil may be discharged onto an artificial island. The soil is retained in a storage area until a second machine is used to discharge the soil back into the trench to cover over the pipeline.

In a method of the kind described above, large volumes of soil have to be moved around over significant distances and that can have adverse environmental effects, especially, but not only, during the discharge of the soil into the trench to cover over the pipeline.

US 4,992,000 discloses an underwater trenching system comprising a trenching sled having high pressure water jets for digging away sediment and a vacuum head for sucking away the resulting sediment, thereby forming a trench. The sediment is re-deposited onto the trench by a bury sled to bury a pipeline that has settled into the trench.

It is an object of the invention to provide an improved mobile apparatus and method for trenching a pipeline laid under water.

According to the invention there is provided, according to claim 1, a mobile apparatus for trenching a pipeline laid under water, the mobile apparatus including:
a mobile base station, and
a soil breaker in the form of a tracked vehicle, the soil breaker including moving parts for breaking up soil adjacent to the pipeline with a mechanical action, the soil breaker being connected to the mobile base station by an umbilical connection arranged to allow the soil breaker to move relative to the mobile base station, the umbilical connection providing a path for control signals from the mobile base station to the soil breaker,
one or more dredging units connected to the mobile base station, the dredging units being arranged to remove soil broken up by the moving parts of the soil breaker from under the pipeline and conveying away the soil mixed with water to form a trench, and
a backfilling unit connected to the mobile base station for receiving soil removed by the one or more dredging units and conveying the soil into the trench to cover over the pipeline;
wherein the soil breaker, the one or more dredging units and the back filling unit are each individually deployable from the mobile base station and are longitudinally spaced along the pipeline.

By providing a mobile apparatus that comprises the combination of a soil breaker, one or more dredging units and a backfilling unit, all connected to a mobile base station, an especially efficient trenching apparatus which has very little environmental impact can be obtained.

The invention is especially suitable for trenching in shallow water of a depth of less than 10m and more especially of a depth in the range of 1m to 5m, but it may also be used in other water depths.

In a preferred embodiment of the invention, the mobile base station is a floating vessel but it may alternatively be a tracked vehicle.

The mobile base station preferably has a length greater than 40m. In an embodiment of the invention described below the base station has a length of 80m and a width of 16m. A substantial length is advantageous in allowing a plurality of dredging units to be connected to the mobile base station at longitudinally-spaced intervals. For example three units may be provided, one at the fore end, one at the aft end and one in the middle of the station. That longitudinal spacing of the units allows the operation of the aft unit, for example, to be varied according to monitoring of the effect of the first and second dredging units.

The soil breaker is connected to the mobile base station by an umbilical connection, and may be arranged to be mounted on the pipeline and may include drive elements for engaging the pipeline to drive the soil breaker along the pipeline. The umbilical connection allows the soil breaker some freedom of movement relative to the mobile base station and the provision of drive elements for engaging the pipeline means that the soil breaker need not then be dependent upon the state of the soil surrounding the pipeline to obtain the required traction.

The soil breaker includes moving parts for breaking up the soil with a mechanical action; the moving parts may, for example, be cutting discs. It will be understood that the term "soil" as used herein is used broadly in respect of gravel, sand, silt, rock and other materials that constitute the ground under sea or other water. According to the nature of the soil and the depth of the trench, different kinds and/or numbers of cutting discs may be required. Usually, if the trench is being formed below the pipeline, it will be sufficient for one disc to be provided on each side of the pipeline for breaking up soil to the side of and below the pipeline.

The umbilical connection from the soil breaker to the mobile base station provides a path for control signals from the mobile base station to the soil breaker and preferably also provides a path for power to be transmitted from the mobile base station to the soil breaker, for example along an electrical, hydraulic or pneumatic path.

Preferably each of the one or more dredging units is arranged to be located on the pipeline and to suck soil and water from each side of the pipeline. The movement of the dredging units along the pipeline is preferably derived directly from the movement of the vessel but it is nonetheless helpful if the pipeline plays an active part in the lateral positioning of the dredging units relative to the pipeline. Each dredging unit may have a suction pipe on each side of the pipeline for sucking soil and water away from the sides of, and from below, the pipeline.

The apparatus preferably further includes one or more pumps for pumping soil and water from the one or more dredging units to the mobile base station. The one or more pumps may be provided on the mobile base station or in the region where the dredging units are located on the pipeline. It is preferred that the backfilling unit directly receives soil removed by the dredging units. Whilst it is within the scope of the invention for soil to be stored temporarily on the mobile base station, it is preferred that the one or more pumps are arranged to pump the soil and water received from the one or more dredging units to the backfilling unit. Preferably a respective pump is provided for each dredging unit.

The soil breaker may be provided with a suction pipe arranged to suck soil and water away from a side of, and/or from below, the pipeline in a region at, or directly adjacent to, the soil breaker. In such a case the soil breaker and its suction pipe may perform a dredging function. The soil breaker may be part of a trenching unit that includes one or more suction pipes for sucking soil and water away from the sides of, and from below, the pipeline. The apparatus preferably further includes one or more pumps for pumping soil and water from the trenching unit to a mobile base station. It is preferred that the backfilling unit directly receives soil removed by the trenching unit. It is also preferred that the soil removed by the trenching unit is transferred to the backfilling unit without being mixed with soil removed by the one or more dredging units and that the soil mixtures from the soil breaker and the dredging units are discharged through separate outlets in the backfilling unit.

Typically, the mixture of soil and water that is sucked up by the suction pipes of the trenching unit is more dense than the soil sucked up by the suction pipes of the dredging unit.

According to an especially preferred embodiment of the invention, the mobile apparatus includes a cover for covering over the filled trench. Such a cover can limit considerably the dispersion of soil conveyed to the trench by the backfilling unit. The cover is preferably arranged to be towed by the mobile base station.

The backfilling unit may comprise a plurality of soil outlets comprising a first outlet and a second outlet, the first outlet being closer to the pipeline than the second outlet, the outlets being so arranged that in use the mixture of soil and water exiting the first outlet is denser than the mixture of soil and water exiting the second outlet. Such an arrangement may improve settlement of the soil over the pipeline and/or may make the soil mixture deposited on the pipeline less prone to dispersion within the water surrounding the pipeline. The first outlet may be position wholly beneath the second outlet. The first outlet may be positioned at substantially the same position in a direction parallel to the pipe as the second outlet. Alternatively, the first outlet may be positioned upstream of the second outlet. The backfilling unit may be provided with a cover. The cover may be shaped such that in cross-section the cover surrounds the first and second outlets. The cover may have a generally inverted U-shaped cross-section preferably such that the shape of soil ejected onto the pipe has a general shape of an inverted U, soil being distributed on top of and to either side of the pipe. The cover may for example be shaped to enclose a space and in particular may have inner and outer layers of material that define a space between them that has an approximately U-shaped cross-section. A U-shaped cover as described above can be advantageous in distributing a mixture of soil and water around the pipe in a trench with minimal disturbance of the soil on settling.

The cover may comprise or be in the form of a geo-textile blanket. The cover may be formed of rigid material. The cover may have an opening downstream of the first and second outlets, through which opening the soil mixture is ejected. The cover may be open, optionally partially, on its underside such that some of the soil is deposited downwards.

The soil mixture conveyed to the first outlet may originate from a soil suction means at a position upstream (in the direction of travel of the backfilling unit) of the soil suction means that conveys soil mixture to the second outlet. The soil mixture conveyed to the first outlet may be conveyed from a soil breaker, whereas the soil mixture conveyed to the second outlet may be conveyed from a dredging unit.

It will be appreciated that features of the present invention relating to the backfilling unit may have application independent of the trenching unit and dredging unit mentioned herein.

According to the invention there is provided, according to claim 12, a method of trenching a pipeline laid under water, the method including the following steps:
providing a mobile base station
providing a soil breaker in the form of a tracked vehicle, the soil breaker including moving parts for breaking up soil adjacent to the pipeline with a mechanical action, connecting the soil breaker to the mobile base station by an umbilical connection arranged to allow the soil breaker to move relative to the mobile base station, the umbilical connection providing a path for control signals from the mobile base station to the soil breaker, and using the soil breaker to break up soil along a path adjacent to the pipeline using the mechanical action,
further providing one or more dredging units connected to the mobile base station, and using the one or more dredging units to remove soil broken up by the moving parts of the soil breaker and to carry away the soil mixed with water to form a trench, and
providing a backfilling unit connected to the mobile base station, the backfilling unit receiving soil removed by the one or more dredging units and conveying the soil into the trench to cover over a pipeline in the trench,
wherein the soil breaker, the one or more dredging units and the back filling unit are each individually deployed from the mobile base station and are longitudinally spaced along the pipeline.

Preferably the soil breaker breaks up soil under the pipeline so that the pipeline can be placed in the trench by allowing the pipeline to sink under gravity into the trench.

The soil breaker may be mounted on the pipeline and travel along the pipeline by engagement of drive elements of the soil breaker with the exterior of the pipeline.

The relative positions of the soil breaker and the mobile base station preferably vary as the trench is formed and filled. The umbilical connection allows such relative movement.

The method preferably further includes the step of providing a cover, preferably a geo-textile cover, above the region of the trench being backfilled, the cover limiting dispersion of soil that is conveyed back into the trench. The cover may be laid over the pipeline and left in place or, alternatively, it may be moved along the pipeline during the trenching operation with the leading edge of the cover in the region where the soil is being conveyed back into the trench. It is preferred that the cover extends over a substantial area, preferably more than 25m² and, more preferably, more than 60m². In the case where the cover is moved along the pipeline during the trenching operation, the cover preferably has a length of at least 5m and may be much longer. In the case of a cover laid in a stationary position, a much longer cover length may be employed, for example 100m.

The backfilling unit preferably deposits soil into the trench such that the soil mixture deposited nearer (in a radial direction with respect to the pipe) to the pipe is denser than the soil mixture deposited further away from the pipe. This feature is particularly advantageous and thus there is further provided a method of backfilling a trench, the method including the steps of depositing soil into the trench to cover over a pipeline in the trench, the soil mixture deposited nearer (in a radial direction with respect to the pipe) to the pipe being denser than the soil mixture deposited further away from the pipe.

Preferably, soil removed by the one or more dredging units is conveyed to the mobile base station and the backfilling unit conveys removed soil from the mobile base station to the trench. Soil mixed with water is preferably pumped directly from the dredging units to the backfilling unit by one or more pumps.

Preferably, soil is discharged from the backfilling unit into the trench at a relatively slow velocity, for example, at less than or equal to approximately one metre per second.

The backfilling unit may be arranged to convey soil to the trench by discharging soil from the backfilling unit at a velocity relative to the backfilling unit that is substantially equal and opposite to the velocity of the backfilling unit relative to the trench. The soil may thus be discharged such that at the instant of discharging its velocity relative to the trench is low, if not zero. In order to achieve this advantageous feature, the backfilling unit may convey soil at a speed higher than the speed of the backfilling unit relative to the trench, and slow the flow of soil down before ejecting it into the trench. The backfilling unit may include a soil outlet that is shaped such that it includes a diverging passageway, which causes the soil flow to slow prior to ejection. Preferably soil is discharged into the trench through one or more diffusers. That slows down the flow and facilitates settlement of the soil over the pipeline. The or each diffuser may include a divergent passageway.

Preferably there is a plurality of mobile base stations. Preferably the movements of the mobile base stations are coordinated.

According to a further aspect of the present disclosure there is disclosed, a mobile apparatus for trenching a pipeline laid under water, the mobile apparatus including:
a plurality of mobile base stations, the mobile base stations being connected such that they move along the pipeline in a coordinated manner,
a soil breaker for breaking up soil adjacent to the pipeline, the soil breaker being connected to a first mobile base station,
one or more dredging units connected to a second mobile base station for removing soil broken up by the soil breaker from under the pipeline and conveying away the soil mixed with water to form a trench, and
a backfilling unit connected to a third mobile base station for receiving soil removed by the one or more dredging units and conveying the soil into the trench to cover over the pipeline.

According to a further aspect of the present disclosure, there is further disclosed a mobile apparatus for trenching a pipeline laid under water, the mobile apparatus including:
a mobile base station,
a soil breaker for breaking up soil adjacent to the pipeline, the soil breaker being connected to the mobile base station,
one or more dredging units connected to the mobile base station for removing soil broken up by the soil breaker from under the pipeline and conveying away the soil mixed with water to form a trench, and
a backfilling unit connected to the mobile base station for receiving soil removed by the one or more dredging units and conveying the soil into the trench to cover over the pipeline
the mobile apparatus further including a cover for covering over the filled trench.

The further aspects may also have any of the features mentioned in relation to the invention according to the first aspect.

According to the present disclosure there is disclosed a mobile apparatus for trenching a pipeline laid under water, the mobile apparatus including:
one or more mobile base stations;
a trenching unit connected to one of the mobile base stations comprising a soil breaker for breaking up soil adjacent to the pipeline and a suction apparatus for removing a first mixture of soil broken up by the soil breaker from under the pipeline mixed with water. It will be appreciated that the present invention has particular application in relation to trenching-in previously laid pipelines or the like.

By way of example, an embodiment of the invention will now be described with reference to the accompanying drawings, in which:
Fig. 1 is a schematic perspective view of a mobile apparatus being used to form a trench for a pipeline,
Fig. 2 is a schematic plan view of the apparatus shown in Fig. 1,
Fig. 3 is a perspective view of a part of the apparatus,
Fig. 4 is a perspective view of another part of the apparatus, and
Figs. 5a and 5b show an alterative embodiment of the invention in which a different backfilling unit is used.

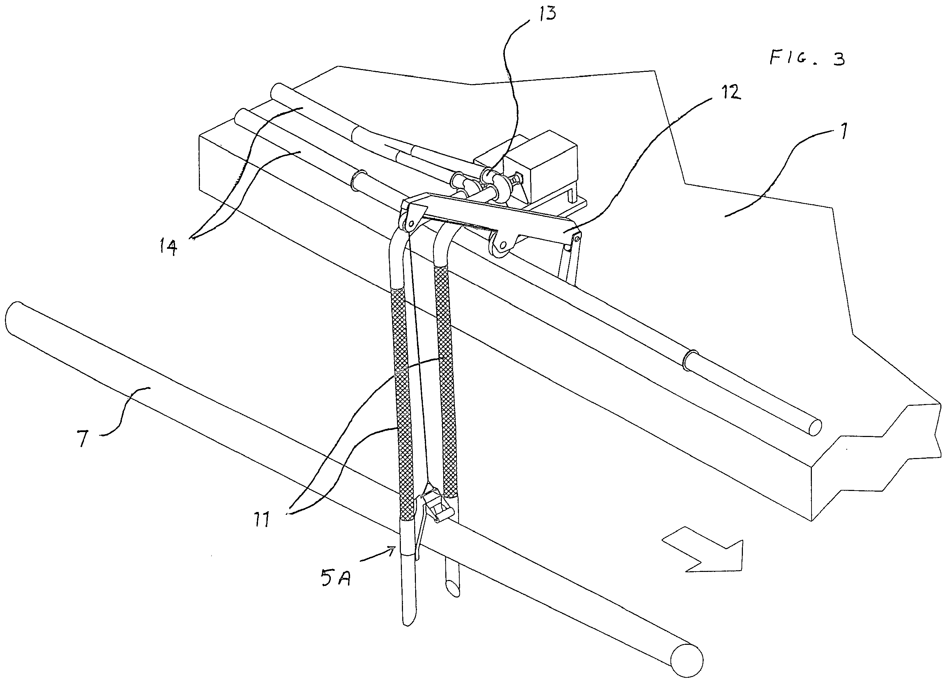

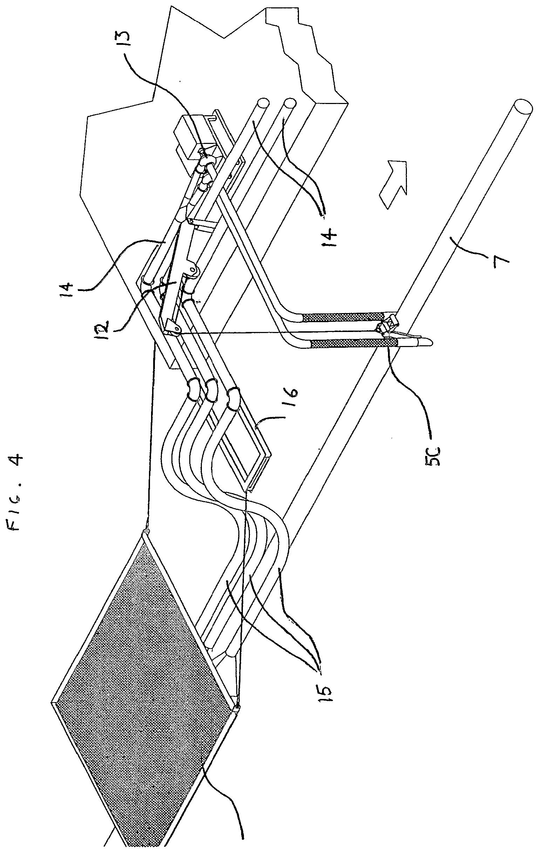

The apparatus shown in the drawing by way of example is designed to operate in water depths of 1.5m to 4.5m. The apparatus generally comprises a mobile base station in the form of a floating barge 1 provided with its own propulsion system (not shown) and carrying on its deck a tracked crane 2 and a plurality of container modules 3 (five such modules being shown in the illustrated embodiment). Connected to the barge 1 are a trenching unit 4, three dredging units 5A, 5B and 5C and a backfilling unit 6. The dredging units are spaced along the length of the barge 1, with the unit 5A at the fore end of the barge, the unit 5C at the aft end and the unit 5B approximately mid-way between the units 5A and 5C. The dredging unit 5A is shown in Fig. 3, whilst part of the dredging unit 5C and the backfilling unit 6 are shown in Fig. 4.

The trenching unit 4 is connected to the barge 1 by an umbilical connection which transmits control signals between the trenching unit and the barge 1, and also transmits power from the barge 1 to the trenching unit. The trenching unit 4 is of a kind known per se and is mounted on a pipeline 7 which has previously been laid. Indeed, in embodiments, the method of this invention includes an initial step of laying a pipeline. The trenching unit 4 includes drive elements that engage the pipeline and drive the unit along the pipeline 7. The distance of the trenching unit from the barge can be changed and any spare length of umbilical line can be wound up by a winch on the barge. The trenching unit comprises, in this example, a pair of cuttings discs which are rotated by motors on the unit powered through the umbilical line and are able to break up soil to a depth of 2.5m in a single pass.

Each of the dredging units 5A to 5C is of substantially the same design. Each unit comprises a pair of hoses 11 (Fig. 3) which extend downwardly from the barge 1 to which they are connected and extend to a suction module guided by rollers bearing on the pipeline 7. Each hose projects downwardly on a respective side of the pipeline 7. The hoses 11 are suspended from the arm of a crane 12 or similar lifting equipment which is on the barge 1 and is able to move the hoses 11 relative to the barge to allow for temporary movements of the barge for example as a result of wave action. Two centrifugal pumps 13 are provided on the barge 1 adjacent to the crane 12 and are connected via flexible pipes to the hoses 11 to suck water and soil through the hoses 11 from the region to the sides of and below the pipeline 7. The outlets of the two pumps 13 are joined to a single pipe 14 which extends to the backfilling unit.

The backfilling unit 6 comprises three hoses 15 which are joined to the pipes 14 and thus directly receives a mixture of water and soil pumped through the hoses 11. The hoses 15 are arranged in a broadly similar manner to the hoses 11, being trailed from the barge 1. Like the hoses 11, the ends of the hoses 15 are connected to a discharge module guided by rollers bearing on the pipeline 7.

Finally a cover 17 of geo-textile material is towed from a support 16. The hoses 15 pass under the leading edge of the cover 17.

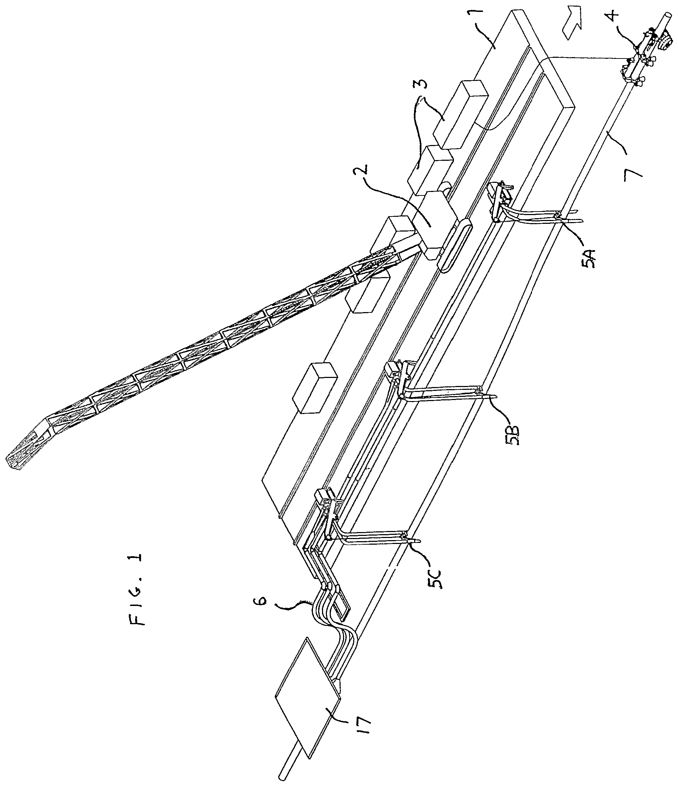

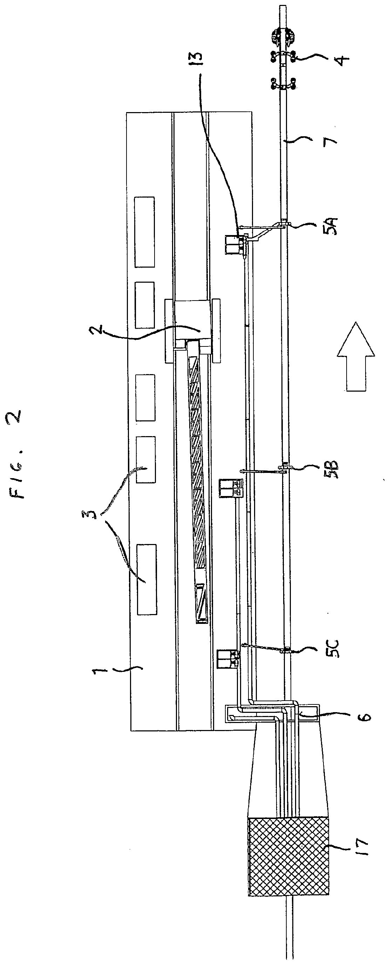

The container modules 3 shown in Figs. 1 and 2 contain ancillary equipment and facilities such as control equipment, canteen and office space, workshop equipment and accommodation.

The operation of the apparatus will now be described starting from the situation where a pipeline has been laid on top of the sea bed.

Before commencing operation, the barge is positioned with the side carrying the trenching, dredging and backfilling units adjacent to, but spaced slightly from, the vertical plane containing the pipeline 7. Trenching unit 4 is then installed over the pipeline 7 in engagement therewith, using the crane 2; similarly the dredging units 5A to 5C, the backfilling unit 6 and the cover 17 are deployed.

Trenching then begins. The trenching unit 4 breaks up, but does not remove, the soil on either side of and below the pipeline. As will be understood, the nature of this "breaking up" will depend on the nature of the soil but the end result should be that the soil is sufficiently loose that it can in a subsequent step be removed by the dredging units 5A to 5C. The umbilical connection allows the trenching unit 4 to operate at whatever speed is suitable at any particular moment, which need not be the speed of the barge.

The barge moves steadily forwards during operation so that the hoses 11 of the dredging unit 5A come into the region where the soil has been broken up by the trenching unit 4. At that stage the pumps 13 connected to the hoses 11 of the unit 5A suck up a mixture of water and soil. Similarly, as the barge moves on a similar action is performed by the dredging unit 5B. The position of the pipeline in the trench is surveyed using sonar (or other means such as feeler arms or other detectors) after each of the dredging units 5A and 5B have passed over the pipeline and the operation of those units, but particularly the operation of the unit 5C, are controlled accordingly. Thus if the depth to which the pipeline 7 has sunk after action of the dredging units 5A and 5B is sufficient, no further dredging takes place when that portion of the pipeline reaches dredging unit 5C.

As will be understood from the description above, the mixture of water and soil sucked up by the pumps 13 is passed through the pipes 14 and hoses 15 to the region of the pipeline at the aft end of the barge 1 where it is discharged under the cover 17. In the described embodiment, the mixture of water and soil is not altered as it is pumped from the dredging units 5A to 5C to the backfilling unit 6. The cover 17 allows water to flow through it whilst retaining most of the soil and thereby reducing the environmental impact. The outlets of the hoses 15 are preferably of enlarged cross-section to reduce flow velocities in the discharge region.

The cover 17 may become clogged after a period of use and can be changed by the crane 2 which can recover it onto the barge.

It will be seen that the apparatus described above is able to complete a trenching operation, including both forming of the trench and covering over of the pipeline in the trench, in a single pass of a single vessel. Furthermore the mixture of water and soil removed by the trenching unit is passed directly to the backfilling unit, eliminating the need for a costly and environmentally unfriendly storage area. Finally the backfilling is substantially improved by the provision of the cover 17.

In a particular example of the invention the barge has a length of 80m and width of 16m. The barge is positioned with its side 4m from the vertical plane of the pipeline. The cover is about 10m square and the umbilical line connected to the trenching unit is about 80m long.

In the preferred embodiment described above there is a single mobile base station, but in an alternative example provided by the present disclosure there is two or more barges which may be physically connected together or whose movements may merely be coordinated by suitable human and/or automated controls, with some units connected to one mobile base station and one or more other units connected to another mobile base station.

An alternative example such as that mentioned in the above paragraph is as follows. The trenching apparatus consists of three separate floating barges, each barge acting as a mobile base station for different parts of the trenching, dredging and filling apparatus. The barges have independent propulsion systems and their movements are coordinated.

The first barge is connected to a trenching unit that includes a soil breaker for breaking up soil adjacent to the pipeline. The pipeline has already been laid on the seabed and is arranged such that when the trench has been dug and the soil sucked out, it settles into the bottom of the trench. The trenching unit is of a known kind and is mounted on the pipeline mentioned above. The trenching unit includes drive elements that engage the pipeline and drive the unit along the pipeline. Also included on the trenching unit is suction apparatus for removing some of the soil broken up by the soil breaker. The trenching unit is connected to the first barge via an umbilical line that provides the trenching unit with both power and control signals. Also connected to the trenching unit is a suction pipe connected to a pumping station on the first barge, which carries off the broken soil removed by the suction apparatus on the trenching unit, up to the first barge. The second barge is connected to a dredging unit that follows the pipeline behind the trenching unit. The dredging unit comprises suction pipes that are connected to a pumping station on the second barge and that suck up soil broken by the trenching unit but not sucked up at the time of breaking. Both the first and second barges are connected to the third one via a pipe, and the soil removed by the first and second barges is pumped along these pipes to the third barge. The third barge is connected to a backfilling station, the backfilling station comprising a pipe from the third barge down to the trench. The third barge also has connected to it a geotextile material that is dragged along the seabed. The geotextile is positioned such that it covers both the outlet of the pipe from the third barge and the region behind the filling pipe and over the pipeline. The cover is positioned in the same way as described above with respect to the illustrated embodiment.

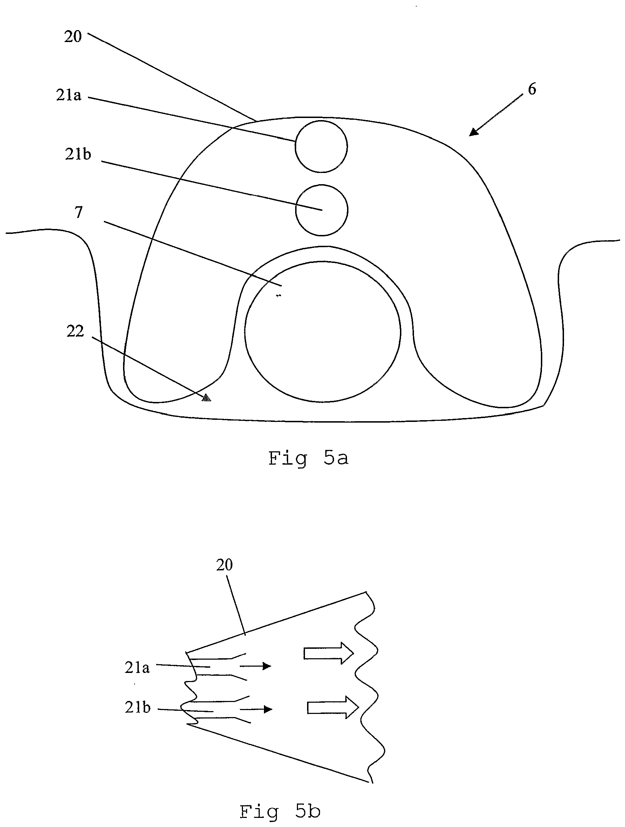

In Figs. 1 and 4, the cover 17 is shown as being relatively flat in shape. It is however within the scope of the present invention to provide a cover of a different shape. Fig. 5a shows a cross-section of a backfilling unit including a cover of such a different shape. The cover 20 is formed of a relatively rigid material and does not need to be in the form of a geotextile blanket. The cover 20 is generally mound-shaped, and has a U-shaped cross-section, which increases in cross-sectional area from one end to the other. The outer surfaces of the cover 20 diverge towards one end of the cover. The cover 20 has a closed end at its leading edge. Inside the space defined by the cover there are provided soil mixture discharge pipes having outlets 21a, 21b that discharge the soil and water mixtures. The closed end of the cover, at its leading edge, has a narrow cross-section, whilst the open end has a wide cross-section. The open end of the cover is downstream of the outlets 21a, 21b. The inner surface of the U-shaped cover 20 is shaped to generally accommodate the pipeline 7 having a curved surface that has a curvature that generally corresponds to that of the upper surface of the pipeline 7. Portions of the cover 20 extend down the sides of the pipeline 7 into the regions 22 in the bottom of the trench.

A particular advantage of the divergent cross-section of the cover 20 of the backfilling unit 6 shown in Fig. 5a arises due to the increasing cross-sectional area reduces the flow velocities of soil mixtures discharged through the backfilling unit. This enables the soil to settle around the pipe with reduced dispersion out of the trench. It is particularly advantageous for reducing dispersion of the soil, when the soil and water mixture is discharged at the same velocity as the backfilling unit moves down the pipeline 7, that is when the mixture is deposited at such a velocity that it is stationary with respect to the pipeline 7. The divergent cross-section of the cover 20 is shown schematically in Fig. 5b. The increasing cross-section of the cover 20 reduces the flow velocities of the soil and water mixture discharged from outlets 21a, 21b as shown schematically by the increasing arrow widths at the open end of the cover 20. It will also be noted that the soil mixture outlets 21a, 21b may also have diverging cross-sections to further slow the soil mixture flow.

A further advantage at the U-shaped cross-section of the cover 20 is that it deposits the soil and water mixture evenly around the pipeline 7 in the trench.

The backfilling unit 6 shown in Fig. 5a comprises two outlets. The second outlet 21 is disposed radially further away from the pipeline 7, that is above the first outlet 21b which is disposed radially closer to the pipeline 7. The second outlet is connected through hoses 15 and pipes 14 to the dredging units 5A to 5C in the manner described above with reference to Fig. 3. The first outlet 21b is connected through hoses and pipes to a suction apparatus on a trenching unit comprising a soil breaker. In operation the more dense soil and water mixture sucked up by the trenching unit is deposited closer to the pipe 7 from the first outlet 21b into the cover 20 than the less dense soil mixture sucked up by the dredging units which is deposited from the second outlet 21a above the more dense material. Depositing two tiers of soil mixture, with a more dense tier closer to the pipeline, enables better settlement of the soil into the trench.

## Claims

1. A mobile apparatus for trenching a pipeline (7) laid under water, the mobile apparatus including:
a mobile base station (1), and
a soil breaker in the form of a tracked vehicle, the soil breaker including moving parts for breaking up soil adjacent to the pipeline (7) with a mechanical action, the soil breaker being connected to the mobile base station (1) by an umbilical connection arranged to allow the soil breaker to move relative to the mobile base station (1), the umbilical connection providing a path for control signals from the mobile base station (1) to the soil breaker,
one or more dredging units (5A, 5B, 5C) connected to the mobile base station (1), the dredging units (5A, 5B, 5C) being arranged to remove soil broken up by the moving parts of the soil breaker from under the pipeline (7) and convey away the broken up soil mixed with water to form a trench, and
a backfilling unit (6) connected to the mobile base station (1) for receiving soil removed by the one or more dredging units (5A, 5B, 5C) and conveying the soil into the trench to cover over the pipeline (7);
wherein the soil breaker, the one or more dredging units (5A, 5B, 5C) and the back filling unit (6) are each individually deployable from the mobile base station (1) and are longitudinally spaced along the pipeline (7).

2. A mobile apparatus according to claim 1 in which the mobile base station (1) is a floating vessel.

3. A mobile apparatus according to claim 1, in which the mobile base station is a tracked vehicle.

4. A mobile apparatus according to any preceding claim, in which the mobile base station (1) has a length greater than 40m.

5. A mobile apparatus according to any preceding claim, in which a plurality of dredging units (5A, 5B, 5C) are provided connected to the mobile base station (1) at longitudinally spaced intervals.

6. A mobile apparatus according to any preceding claim, in which the soil breaker includes cuttings discs for breaking up the soil.

7. A mobile apparatus according to any preceding claim, in which each of the one or more dredging units (5A, 5B, 5C) is arranged to be located on the pipeline (7) and to suck soil and water from each side of the pipeline (7).

8. A mobile apparatus according to any preceding claim, further including one or more pumps (13) for pumping soil and water from the one or more dredging units (5A, 5B, 5C) to the mobile base station (1).

9. A mobile apparatus according to claim 8, in which the one or more pumps (13) are arranged to pump the soil and water received from one or more dredging units (5A, 5B, 5C) to the backfilling unit (6).

10. A mobile apparatus according to any preceding claim, further including a cover (17) for covering over the filled trench.

11. A mobile apparatus according to claim 10, in which the cover (17) is arranged to be towed by the mobile base station (1).

12. A method of trenching a pipeline (7) laid under water, the method including the following steps:
providing a mobile base station (1),
providing a soil breaker in the form of a tracked vehicle, the soil breaker including moving parts for breaking up soil adjacent to the pipeline (7) with a mechanical action, connecting the soil breaker to the mobile base station (1) by an umbilical connection arranged to allow the soil breaker to move relative to the mobile base station (1), the umbilical connection providing a path for control signals from the mobile base station (1) to the soil breaker, and using the soil breaker to break up soil along a path adjacent to the pipeline (7) using the mechanical action,
further providing one or more dredging units (5A, 5B, 5C) connected to the mobile base station (1), and using the one or more dredging units (5A, 5B, 5C) to remove soil broken up by the moving parts of the soil breaker and to carry away the soil mixed with water to form a trench, and
providing a backfilling unit (6) connected to the mobile base station (1), the backfilling unit (6) receiving soil removed by the one or more dredging units (5A, 5B, 5C) and conveying the soil into the trench to cover over a pipeline (7) in the trench,
wherein the soil breaker, the one or more dredging units (5A, 5B, 5C) and the back filling unit (6) are each individually deployed from the mobile base station (1) and are longitudinally spaced along the pipeline (7).

13. A method according to claim 12, in which the soil breaker breaks up soil under the pipeline (7).

14. A method according to claim 12, in which the method includes the step of placing the pipeline (7) in the trench by allowing the pipeline (7) to sink under gravity into the trench.

15. A method according to any of claims 12 to 14, in which the relative positions of the soil breaker and the mobile base station vary as the trench is formed and filled.

16. A method according to any of claims 12 to 15, further including the step of providing a cover (17) above the region of the trench being backfilled, the cover (17) limiting dispersion of soil that is conveyed back into the trench.

17. A method according to claim 16 in which the cover (17) is a geo-textile cover.

18. A method according to claim 16 or 17, in which the cover (17) is moved along the pipeline (7) during the trenching with the leading edge of the cover (17) in the region where the soil is being conveyed back into the trench.

19. A method according to any of claims 16 to 18, in which the cover (17) is towed by the mobile base station (1).

20. A method according to any of claims 12 to 19, in which soil removed by the one or more dredging units (5A, 5B, 5C) is conveyed to the mobile base station (1) and the backfilling unit (6) conveys removed soil from the mobile base station (1) to the trench.

21. A method according to claim 20, in which soil mixed with water is pumped directly from the dredging units (5A, 5B, 5C) to the backfilling unit (6) by one or more pumps (13).

22. A mobile apparatus according to claim 1 including a plurality of mobile base stations.

23. A mobile apparatus according to claim 22 wherein the movement of the mobile base stations are coordinated.

24. A mobile apparatus according to claim 1, wherein a soil breaker is connected to a first mobile base station, one or more dredging units are connected to a second mobile base station, and a backfilling unit is connected to a third mobile base station.

## Patentansprüche

1. Mobile Vorrichtung zum Vergraben einer unter Wasser verlegten Rohrleitung (7), wobei die mobile Vorrichtung umfasst:
eine mobile Basisstation (1) und
einen Bodenbrecher in Form eines Kettenfahrzeugs, wobei der Bodenbrecher bewegliche Teile zum Aufbrechen des an die Rohrleitung (7) angrenzenden Bodens mit mechanischer Wirkung enthält, wobei der Bodenbrecher durch eine Nabelverbindung mit der mobilen Basisstation (1) verbunden ist, die so angeordnet ist, dass sich der Bodenbrecher relativ zur mobilen Basisstation (1) bewegen kann, wobei die Nabelverbindung einen Pfad für Steuersignale von der mobilen Basisstation (1) an den Bodenbrecher bereitstellt,
eine oder mehrere Baggereinheiten (5A, 5B, 5C), die mit der mobilen Basisstation (1) verbunden sind, wobei die Baggereinheiten (5A, 5B, 5C) so angeordnet sind, dass sie Boden, der durch die beweglichen Teile des Bodenbrechers aufgebrochen wurde, unter der Rohrleitung (7) entfernen und den mit Wasser vermischten aufgebrochenen Boden wegführen, um einen Graben zu bilden, und
eine Verfülleinheit (6), die mit der mobilen Basisstation (1) verbunden ist, um Boden aufzunehmen, der von der einen oder den mehreren Baggereinheiten (5A, 5B, 5C) entfernt wurde, und den Boden in den Graben zu befördern, um die Rohrleitung (7) abzudecken;
wobei der Bodenbrecher, die eine oder die mehreren Baggereinheiten (5A, 5B, 5C) und die Verfülleinheit (6) jeweils einzeln von der mobilen Basisstation (1) aus einsetzbar sind und entlang der Rohrleitung (7) in Längsrichtung beabstandet sind.

2. Mobile Vorrichtung nach Anspruch 1, bei der die mobile Basisstation (1) ein schwimmendes Schiff ist.

3. Mobile Vorrichtung nach Anspruch 1, bei der die mobile Basisstation (1) ein Kettenfahrzeug ist.

4. Mobile Vorrichtung nach einem der vorhergehenden Ansprüche, bei der die mobile Basisstation (1) eine Länge von mehr als 40 m aufweist.

5. Mobile Vorrichtung nach einem der vorhergehenden Ansprüche, bei der mehrere Baggereinheiten (5A, 5B, 5C) vorgesehen sind, die in in Längsrichtung beabstandeten Intervallen mit der mobilen Basisstation (1) verbunden sind.

6. Mobile Vorrichtung nach einem der vorhergehenden Ansprüche, bei der der Bodenbrecher Schnittscheiben zum Aufbrechen des Bodens enthält.

7. Mobile Vorrichtung nach einem der vorhergehenden Ansprüche, bei der jede der einen oder mehreren Baggereinheiten (5A, 5B, 5C) so angeordnet ist, dass sie sich an der Rohrleitung (7) befindet und um Boden und Wasser von jeder Seite der Rohrleitung (7) abzusaugen.

8. Mobile Vorrichtung nach einem der vorhergehenden Ansprüche, ferner umfassend eine oder mehrere Pumpen (13) zum Pumpen von Boden und Wasser von der einen oder den mehreren Baggereinheiten (5A, 5B, 5C) zur mobilen Basisstation (1).

9. Mobile Vorrichtung nach Anspruch 8, bei der die eine oder mehreren Pumpen (13) angeordnet sind, um den Boden und das Wasser, die von einer oder mehreren Baggereinheiten (5A, 5B, 5C) aufgenommen werden, zur Verfülleinheit (6) zu pumpen.

10. Mobile Vorrichtung nach einem der vorhergehenden Ansprüche, ferner umfassend eine Abdeckung (17) zum Abdecken des gefüllten Grabens.

11. Mobile Vorrichtung nach Anspruch 10, bei der die Abdeckung (17) so angeordnet ist, dass sie von der mobilen Basisstation (1) geschleppt wird.

12. Verfahren zum Vergraben einer unter Wasser verlegten Rohrleitung (7), wobei das Verfahren die folgenden Schritte umfasst:
Bereitstellen einer mobilen Basisstation (1),
Bereitstellen eines Bodenbrechers in Form eines Kettenfahrzeugs, wobei der Bodenbrecher bewegliche Teile zum Aufbrechen des an die Rohrleitung (7) angrenzenden Bodens mit mechanischer Wirkung enthält, Verbinden des Bodenbrechers mit der mobilen Basisstation (1) über eine Nabelverbindung, die so angeordnet ist, dass sich der Bodenbrecher relativ zur mobilen Basisstation (1) bewegen kann, wobei die Nabelverbindung einen Pfad für Steuersignale von der mobilen Basisstation (1) an den Bodenbrecher bereitstellt, und Verwenden des Bodenbrechers zum Aufbrechen des Bodens entlang eines an die Rohrleitung (7) angrenzenden Pfades unter Verwendung der mechanischen Wirkung,
des Weiteren Bereitstellen einer oder mehrerer Baggereinheiten (5A, 5B, 5C), die mit der mobilen Basisstation (1) verbunden sind, und Verwenden der einen oder der mehreren Baggereinheiten (5A, 5B, 5C) zum Entfernen von Boden, der durch die beweglichen Teile des Bodenbrechers aufgebrochen wurde und um den mit Wasser vermischten Boden abzutragen, um einen Graben zu bilden, und
Bereitstellen einer Verfülleinheit (6), die mit der mobilen Basisstation (1) verbunden ist, wobei die Verfülleinheit (6) Boden aufnimmt, der von der einen oder den mehreren Baggereinheiten (5A, 5B, 5C) entfernt wurde und den Boden in den Graben befördert, um die Rohrleitung (7) in dem Graben abzudecken;
wobei der Bodenbrecher, die eine oder die mehreren Baggereinheiten (5A, 5B, 5C) und die Verfülleinheit (6) jeweils einzeln von der mobilen Basisstation (1) aus einsetzbar sind und entlang der Rohrleitung (7) in Längsrichtung beabstandet sind.

13. Verfahren nach Anspruch 12, bei dem der Bodenbrecher den Boden unter der Rohrleitung (7) aufbricht.

14. Verfahren nach Anspruch 12, wobei das Verfahren den Schritt des Platzierens der Rohrleitung (7) in dem Graben umfasst, indem die Rohrleitung (7) unter Schwerkraft in den Graben sinken kann.

15. Verfahren nach einem der Ansprüche 12 bis 14, bei dem die relativen Positionen des Bodenbrechers und der mobilen Basisstation variieren, wenn der Graben gebildet und gefüllt wird.

16. Verfahren nach einem der Ansprüche 12 bis 15, ferner umfassend den Schritt des Bereitstellens einer Abdeckung (17) über dem Bereich des zu füllenden Grabens, wobei die Abdeckung (17) die Dispersion von Boden begrenzt, der in den Graben zurückgeführt wird.

17. Verfahren nach Anspruch 16, bei dem die Abdeckung (17) eine geotextile Abdeckung ist.

18. Verfahren nach Anspruch 16 oder 17, bei dem die Abdeckung (17) während des Grabens entlang der Rohrleitung (7) bewegt wird, wobei sich die Vorderkante der Abdeckung (17) in dem Bereich befindet, in den der Boden in den Graben zurückgeführt wird.

19. Verfahren nach einem der Ansprüche 16 bis 18, bei dem die Abdeckung (17) von der mobilen Basisstation (1) gezogen wird.

20. Verfahren nach einem der Ansprüche 12 bis 19, bei dem durch die eine oder die mehreren Baggereinheiten (5A, 5B, 5C) entfernter Boden zur mobilen Basisstation (1) befördert wird und die Verfülleinheit (6) entfernten Boden von der mobilen Basisstation (1) zum Graben befördert.

21. Verfahren nach Anspruch 20, bei dem mit Wasser vermischter Boden mit einer oder mehreren Pumpen (13) direkt von den Baggereinheiten (5A, 5B, 5C) zur Verfülleinheit (6) gepumpt wird.

22. Mobile Vorrichtung nach Anspruch 1, die mehrere mobile Basisstationen umfasst.

23. Mobile Vorrichtung nach Anspruch 22, wobei die Bewegung der mobilen Basisstationen koordiniert ist.

24. Mobile Vorrichtung nach Anspruch 1, wobei ein Bodenbrecher mit einer ersten mobilen Basisstation verbunden ist, eine oder mehrere Baggereinheiten mit einer zweiten mobilen Basisstation verbunden sind und eine Verfülleinheit mit einer dritten mobilen Basisstation verbunden ist.

## Revendications

1. Appareil mobile pour creuser une tranchée d'un pipeline (7) disposé sous l'eau, l'appareil mobile comprenant :
une station de base mobile (1), et
un outil de décompactage sous la forme d'un véhicule à chenilles, l'outil de décompactage comprenant des parties mobiles pour casser le sol adjacent au pipeline (7) par une action mécanique, l'outil de décompactage étant relié à la station de base mobile (1) par une connexion ombilicale agencée de façon à permettre à l'outil de décompactage de se déplacer par rapport à la station de base mobile (1), la connexion ombilicale fournissant un chemin pour les signaux de commande de la station de base mobile (1) à l'outil de décompactage,
une ou plusieurs unités de dragage (5A, 5B, 5C) raccordées à la station de base mobile (1), les unités de dragage (5A, 5B, 5C) étant agencées pour enlever la terre décompactée par les parties mobiles de l'outil de décompactage de sous le pipeline (7) et transporter la terre décompactée mélangée à l'eau pour former une tranchée, et
une unité de remblayage (6) raccordée à la station de base mobile (1) pour recevoir la terre enlevée par l'une ou plusieurs unités de dragage (5A, 5B, 5C) et transporter la terre dans la tranchée pour recouvrir le pipeline (7) ;
dans lequel l'outil de décompactage, l'une ou plusieurs unités de dragage (5A, 5B, 5C) et l'unité de remblayage (6) peuvent chacun être déployés individuellement depuis la station de base mobile (1) et sont longitudinalement espacés le long du pipeline (7).

2. Appareil mobile selon la revendication 1, dans lequel la station de base mobile (1) est un vaisseau flottant.

3. Appareil mobile selon la revendication 1, dans lequel la station de base mobile est un véhicule à chenilles.

4. Appareil mobile selon l'une quelconque des revendications précédentes, dans lequel la station de base mobile (1) présente une longueur supérieure à 40 m.

5. Appareil mobile selon l'une quelconque des revendications précédentes, dans lequel une pluralité d'unités de dragage (5A, 5B, 5C) sont fournies, raccordées à la station de base mobile (1) à intervalles longitudinalement espacés.

6. Appareil mobile selon l'une quelconque des revendications précédentes, dans lequel l'outil de décompactage comprend des disques de découpe pour briser le sol.

7. Appareil mobile selon l'une quelconque des revendications précédentes, dans lequel chacune des une ou plusieurs unités de dragage (5A, 5B, 5C) est agencée pour être située sur le pipeline (7) et pour aspirer la terre et l'eau de chaque côté du pipeline (7).

8. Appareil mobile selon l'une quelconque des revendications précédentes, comprenant en outre une ou plusieurs pompes (13) pour pomper la terre et l'eau de l'une ou plusieurs unités de dragage (5A, 5B, 5C) vers la station de base mobile (1).

9. Appareil mobile selon la revendication 8, dans lequel la ou les pompes (13) sont agencées de façon à pomper la terre et l'eau reçues de l'une ou plusieurs unités de dragage (5A, 5B, 5C) vers l'unité de remblayage (6).

10. Appareil mobile selon l'une quelconque des revendications précédentes, comprenant en outre une couverture (17) pour recouvrir la tranchée remplie.

11. Appareil mobile selon la revendication 10, dans lequel la couverture (17) est agencée pour être tractée par la station de base mobile (1).

12. Procédé pour creuser une tranchée d'un pipeline (7) disposé sous l'eau, le procédé comprenant les étapes suivantes consistant à :
fournir une station de base mobile (1),
fournir un outil de décompactage sous la forme d'un véhicule à chenilles, l'outil de décompactage comprenant des parties mobiles pour briser le sol adjacent au pipeline (7) par une action mécanique, raccorder l'outil de décompactage à la station de base mobile (1) par une connexion ombilicale agencée de façon à permettre à l'outil de décompactage de se déplacer par rapport à la station de base mobile (1), la connexion ombilicale fournissant un chemin pour des signaux de commande provenant de la station de base mobile (1) à l'outil de décompactage, et utiliser l'outil de décompactage pour briser le sol le long d'un chemin adjacent au pipeline (7) en utilisant l'action mécanique,
fournir en outre une ou plusieurs unités de dragage (5A, 5B, 5C) raccordées à la station de base mobile (1), et l'utilisation de la ou des unités de dragage (5A, 5B, 5C) pour enlever la terre décompactée par les parties mobiles de l'outil de décompactage et transporter la terre mélangée à l'eau pour former une tranchée, et
fournir une unité de remblayage (6) raccordée à la station de base mobile (1), l'unité de remblayage (6) recevant de la terre enlevée par la ou les unités de dragage (5A, 5B, 5C) et transportant la terre dans la tranchée pour recouvrir un pipeline (7) dans la tranchée,
dans lequel l'outil de décompactage, la ou les unités de dragage (5A, 5B, 5C) et l'unité de remblayage (6) peuvent chacun être déployé depuis la station de base mobile (1) et sont longitudinalement espacés le long du pipeline (7).

13. Procédé selon la revendication 12, dans lequel l'outil de décompactage brise le sol sous le pipeline (7).

14. Procédé selon la revendication 12, dans lequel le procédé comprend l'étape consistant à placer le pipeline (7) dans la tranchée, permettant ainsi au pipeline (7) de couler sous l'effet de la gravité dans la tranchée.

15. Procédé selon l'une quelconque des revendications 12 à 14, dans lequel les positions relatives de l'outil de décompactage et de la station de base mobile varient au fur et à mesure de la formation et du remplissage de la tranchée.

16. Procédé selon l'une quelconque des revendications 12 à 15, comprenant en outre l'étape consistant à fournir une couverture (17) au-dessus de la région de la tranchée remblayée, la couverture (17) limitant la dispersion de la terre qui est retransportée dans la tranchée.

17. Procédé selon la revendication 16, dans lequel la couverture (17) est une couverture en géotextile.

18. Procédé selon la revendication 16 ou 17, dans lequel la couverture (17) est déplacée le long du pipeline (7) pendant la réalisation de la tranchée avec le bord d'attaque de la couverture (17) dans la région où la terre est retransportée dans la tranchée.

19. Procédé selon l'une quelconque des revendications 16 à 18, dans lequel la couverture (17) est tractée par la station de base mobile (1).

20. Procédé selon l'une quelconque des revendications 12 à 19, dans lequel la terre enlevée par la ou les unités de dragage (5A, 5B, 5C) est transportée jusqu'à la station de base mobile (1) et l'unité de remblayage (6) transporte la terre enlevée de la station de base mobile (1) à la tranchée.

21. Procédé selon la revendication 20, dans lequel la terre mélangée à l'eau est pompée directement depuis les unités de dragage (5A, 5B, 5C) vers l'unité de remblayage (6) par une ou plusieurs pompes (13).

22. Appareil mobile selon la revendication 1, comprenant une pluralité de stations de base mobiles.

23. Appareil mobile selon la revendication 22, dans lequel les mouvements des stations de base mobiles sont coordonnés.

24. Appareil mobile selon la revendication 1, dans lequel un outil de décompactage est raccordé à une première station de base mobile, une ou plusieurs de dragage sont raccordées à une deuxième station de base mobile, et une unité de remblayage est raccordée à une troisième station de base mobile.
